# EUROPEAN PATENT APPLICATION

(11) **EP 3 928 950 A1**
(43) Date of publication of application: **29.12.2021**
(21) Application number: 21181881.0
(22) Date of filing: 25.06.2021
(51) Int. Cl.: B29C 45/46, B29C 45/54, B29C 45/74, B29C 45/78, B29C 45/76, B33Y 30/00, B29C 64/343, B29C 64/106

(54) **PLASTICIZING APPARATUS, INJECTION MOLDING APPARATUS, AND THREE-DIMENSIONAL MODELING APPARATUS**

(30) Priority: 26.06.2020 JP 2020110071
(71) Applicant: Seiko Epson Corporation, Tokyo 160-8801 (JP)
(72) Inventor: ANEGAWA, Kenta, Suwa-shi 392-8502 (JP)
(74) Representative: Miller Sturt Kenyon

(57) **Abstract**

A plasticizing apparatus, includes: a drive motor; a rotor that is rotated around a rotation axis by the drive motor and that has a groove forming surface on which a groove is formed; a barrel that has a facing surface facing the groove forming surface and that includes a communication hole in the facing surface; a heating portion that heats a material supplied to between the groove and the barrel; and a controller that controls the drive motor and the heating portion to plasticize the material supplied to between the groove and the barrel and discharge the material from the communication hole, the facing surface includes a first region and a second region that is closer to the communication hole than is the first region, the controller controls the heating portion to set a temperature of the second region to be higher than a temperature of the first region, and the controller controls the heating portion to reduce a temperature difference between the first region and the second region when the material includes a crystalline resin as compared with a case where the material includes an amorphous resin.

## Description

The present application is based on, and claims priority from JP Application Serial Number 2020-110071, filed June 26, 2020, the disclosure of which is hereby incorporated by reference herein in its entirety.

### BACKGROUND

### 1. Technical Field

The present disclosure relates to a plasticizing apparatus, an injection molding apparatus and a three-dimensional modeling apparatus.

### 2. Related Art

Regarding a plasticizing apparatus that plasticizes a thermoplastic resin, for example, JP-A-2009-269182 describes an apparatus including a rotor including a spiral groove, a barrel facing the rotor, and a heating portion. In this apparatus, a resin material supplied into the spiral groove is plasticized by rotating the rotor while heating the material by the heating portion.

A type of the thermoplastic resin includes a crystalline resin or an amorphous resin. When these resins are plasticized, appropriate heating conditions for plasticizing differ depending on the type of the resin. Therefore, in an apparatus provided with the rotor, the barrel, and the heating portion as described above, a technique capable of satisfactorily plasticizing a material including either a crystalline resin or an amorphous resin is demanded.

### SUMMARY

A first aspect of the present disclosure provides a plasticizing apparatus. The plasticizing apparatus, includes: a drive motor; a rotor that is rotated around a rotation axis by the drive motor and that has a groove forming surface on which a groove is formed; a barrel that has a facing surface facing the groove forming surface and that includes a communication hole in the facing surface; a heating portion that heats a material supplied to between the groove and the barrel; and a controller that controls the drive motor and the heating portion to plasticize the material supplied to between the groove and the barrel and discharge the material from the communication hole, the facing surface includes a first region and a second region that is closer to the communication hole than is the first region, the controller controls the heating portion to set a temperature of the second region to be higher than a temperature of the first region, and the controller controls the heating portion to reduce a temperature difference between the first region and the second region when the material includes a crystalline resin as compared with a case where the material includes an amorphous resin.

A second aspect of this disclosure provides an injection molding apparatus that includes the plasticizing apparatus according to the above aspect; and a nozzle that communicates with the communication hole and from which the plasticized material is injected into a molding mold.

A third aspect of this disclosure provides a three-dimensional modeling apparatus that includes: the plasticizing apparatus according to the above aspect; and a nozzle that communicates with the communication hole and from which the plasticized material is discharged toward a table.

### BRIEF DESCRIPTION OF THE DRAWINGS

FIG. 1 is a front view showing a schematic configuration of an injection molding apparatus according to a first embodiment.
FIG. 2 is a cross-sectional view showing the schematic configuration of the injection molding apparatus.
FIG. 3 is a perspective view showing a configuration of a rotor.
FIG. 4 is a perspective view showing a configuration of a barrel.
FIG. 5 is an enlarged cross-sectional view showing a configuration on a vicinity of the barrel.
FIG. 6 is a flowchart of a temperature setting process.
FIG. 7 is an explanatory view showing a configuration of a heating portion according to a second embodiment.
FIG. 8 is a cross-sectional view showing a state of a rotor and a barrel according to a third embodiment.
FIG. 9 is a cross-sectional view showing a schematic configuration of a three-dimensional modeling apparatus according to a fourth embodiment.

### DESCRIPTION OF EXEMPLARY EMBODIMENTS

### A. First Embodiment:

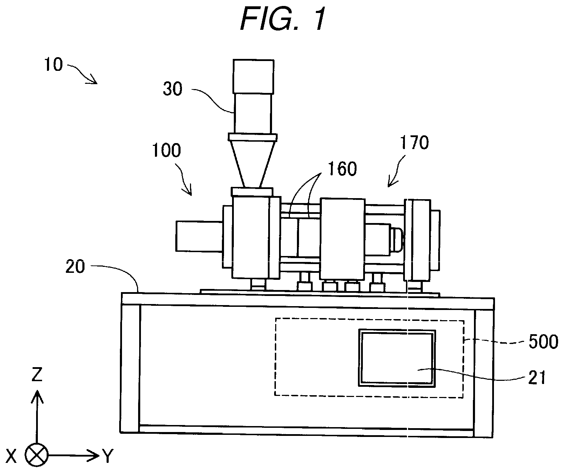

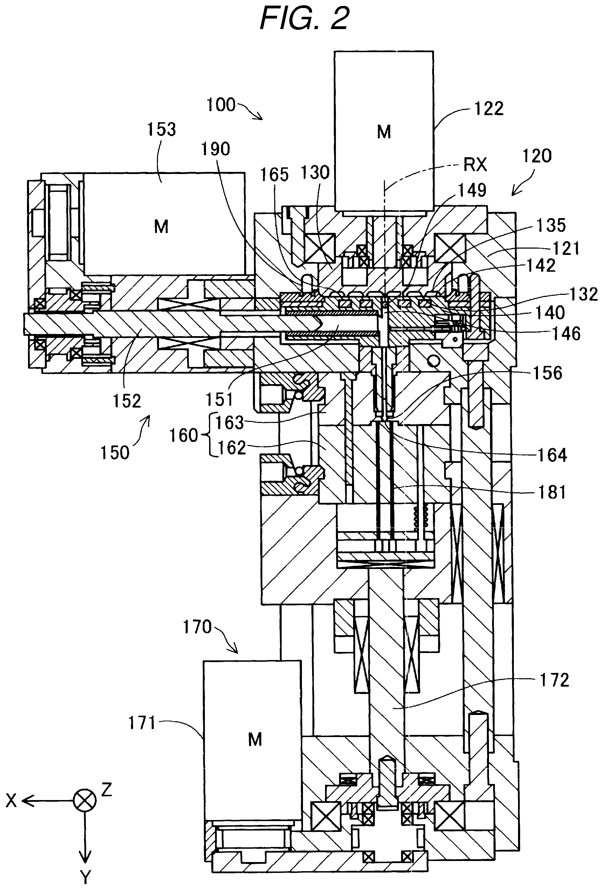

FIG. 1 is a front view showing a schematic configuration of an injection molding apparatus 10 according to a first embodiment. FIG. 1 shows arrows indicating X, Y, and Z directions that are orthogonal to one another. The X direction and the Y direction are directions parallel to a horizontal plane, and the Z direction is a direction opposite to a direction of gravity. X, Y, Z directions shown in FIG. 2 and subsequent drawings correspond to the X, Y, Z directions shown in FIG. 1. In the following description, when a direction is specified, "+" indicates a positive direction that is a direction indicated by an arrow, "-" indicates a negative direction that is a direction opposite to the direction indicated by the arrow, and positive and negative symbols are used together to indicate the directions.

The injection molding apparatus 10 includes a plasticizing portion 100 and a mold clamping portion 170. The plasticizing portion 100 is also called a plasticizing apparatus. The plasticizing portion 100 and the mold clamping portion 170 are fixed to a base 20. The base 20 is provided with a controller 500. The injection molding apparatus 10 injects a molten material from the plasticizing portion 100 into a molding mold 160 mounted in the mold clamping portion 170 to mold a molded product. In the present embodiment, the metal molding mold 160 is mounted in the mold clamping portion 170. The molding mold 160 mounted in the mold clamping portion 170 is not limited to one made of metal, and may be one made of resin or ceramic. The metal molding mold 160 is called a metal mold.

A hopper 30 into which a material of the molded product is to be charged is coupled to the plasticizing portion 100. As the material for the molded product, for example, a thermoplastic resin formed in a pellet form is used. Types of the thermoplastic resin include a crystalline resin and an amorphous resin. As is well known, the crystalline resin has a glass transition point and a melting point, whereas the amorphous resin has no melting point and has only the glass transition point. A temperature at which these resins can be plasticized, that is, a melting and softening start temperature, is the melting point for the crystalline resin and is the glass transition point for the amorphous resin. The melting point of the crystalline resin is generally higher than the glass transition point of the amorphous resin. Therefore, the crystalline resin tends to have a higher plasticizable temperature than the amorphous resin.

Examples of the crystalline resin include polyethylene (PE), polypropylene (PP), polyamide (PA), polyacetal polyoxymethylene (POM), polyethylene terephthalate (PET), polybutylene terephthalate (PBT), and polyphenylene sulfide (PPS), or the like. Examples of the amorphous resin include polyvinyl chloride (PVC), polystyrene (PS), polymethylmethacrylate (PMMA), acrylonitrile butadiene styrene (ABS), and polycarbonate (PC).

The plasticizing portion 100 plasticizes a material supplied from the hopper 30 into the molten material, and injects the molten material into the molding mold 160 mounted in the mold clamping portion 170. In the present embodiment, a term "plasticization" means that a material having thermoplasticity is heated and melted. A term "melting" means not only that the material having the thermoplasticity is heated to a temperature equal to or higher than the melting point so as to be melt into a liquid, but also means that, the material having the thermoplasticity is softened by being heated to a temperature equal to or higher than the glass transition point and exhibits fluidity.

The controller 500 is configured by a computer including one or a plurality of processors, a main storage device, and an input and output interface that inputs a signal from the outside and outputs a signal to the outside. The controller 500 controls the plasticizing portion 100 and the mold clamping portion 170 to manufacture the molded product by the processor reading and executing a program on the main storage device. The controller 500 of the present embodiment displays a list of materials on a touch panel 21 and accepts a selection of the materials from a user via the touch panel 21. That is, the controller 500 has a function of acquiring material information including a type of the material from the user. The controller 500 determines whether the material is the crystalline resin or the amorphous resin based on the material information, and sets a heating condition of the material. The controller 500 may be configured by combining a plurality of circuits instead of being configured by the computer.

FIG. 2 is a cross-sectional view showing a schematic configuration of the injection molding apparatus 10. FIG. 2 shows a cross section of the injection molding apparatus 10 viewed from a lower side of FIG. 1, that is, a -Z direction. As described above, the injection molding apparatus 10 includes the plasticizing portion 100 and the mold clamping portion 170, and the molding mold 160 is attached to the injection molding apparatus 10.

The plasticizing portion 100 includes a melting portion 120, an injection controller 150, and a nozzle 156.

The melting portion 120 includes a case 121, a drive motor 122, a rotor 130, a barrel 140, a heating portion 165, and a check valve 149. The melting portion 120 plasticizes at least a part of the material supplied from the hopper 30, and generates a paste molten material having fluidity, and then guides the molten material to the injection controller 150.

The rotor 130 has a substantially columnar shape whose height in a direction along a central axis RX thereof is smaller than a diameter. The rotor 130 is accommodated in a space surrounded by the case 121 and the barrel 140. The rotor 130 includes a groove forming surface 132, which is substantially perpendicular to the central axis RX, on an end surface facing the barrel 140. The groove forming surface 132 of the rotor 130 faces a facing surface 142 of the barrel 140 which is substantially perpendicular to the central axis RX. The drive motor 122 is coupled to an opposite-side surface of the rotor 130 from the groove forming surface 132. The rotor 130 rotates around the central axis RX due to a torque generated by the drive motor 122. The drive motor 122 is driven under a control of the controller 500. The central axis RX may be referred to as a rotation axis of the rotor 130.

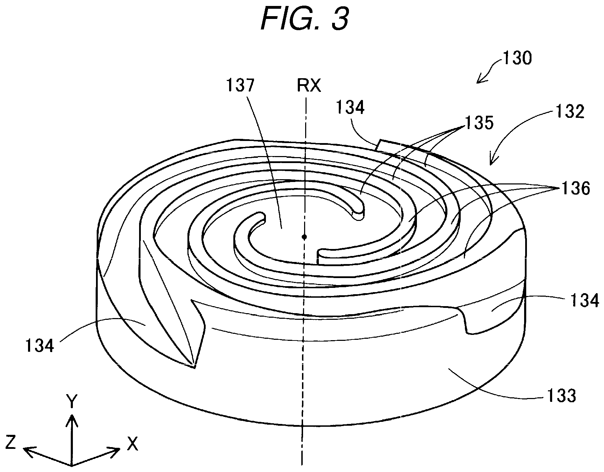

FIG. 3 is a perspective view showing a configuration of the rotor 130 on a groove forming surface 132 side. In FIG. 3, a position of the central axis RX of the rotor 130 is shown by a dotted and dashed line. Grooves 135 are provided on the groove forming surface 132. The rotor 130 can also be referred to as a "flat screw" or a "scroll".

The grooves 135 of the rotor 130 constitute a so-called scroll groove. The groove 135 extends from a central portion 137 toward an outer periphery of the rotor 130 in a swirl shape so as to draw an arc. The groove 135 may be configured to extend in an involute curve shape or a spiral shape. The groove forming surface 132 is provided with ridge portions 136 that form side wall portions of respective grooves 135 and extend along the respective grooves 135. The groove 135 extends continuously to a material introduction port 134 formed on a side surface 133 of the rotor 130. The material introduction port 134 is a portion for receiving a material to the groove 135. The material supplied from the hopper 30 is supplied to between the rotor 130 and the barrel 140 via the material introduction port 134.

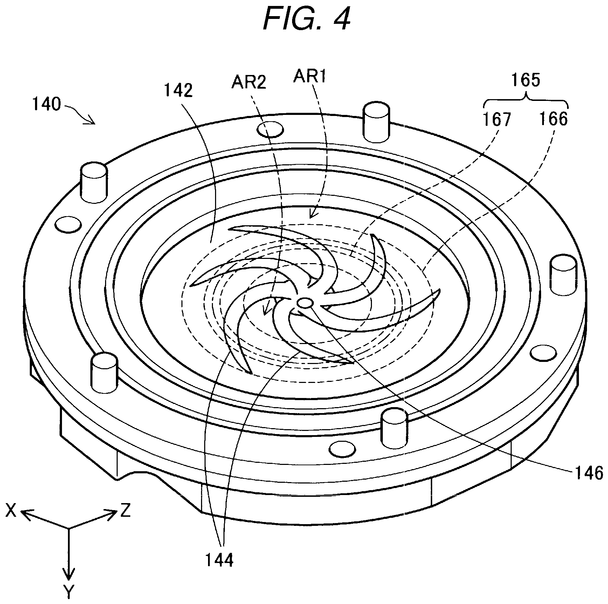

The central portion 137 of the groove forming surface 132 of the rotor 130 is configured as a recess to which one end of the groove 135 is coupled. The central portion 137 faces a communication hole 146 provided in the facing surface 142 of the barrel 140 shown in FIG. 4. The central portion 137 intersects the central axis RX.

FIG. 3 shows an example of the rotor 130 including three grooves 135, three ridge portions 136, and three material introduction ports 134. The number of the grooves 135, the ridge portions 136, and the material introduction ports 134 provided in the rotor 130 is not limited to three. The rotor 130 may be provided with only one groove 135, or may be provided with two or more grooves 135. Any number of the ridge portions 136 and the material introduction ports 134 may be provided according to the number of the grooves 135.

FIG. 4 is a perspective view showing a configuration of the barrel 140 on a facing surface 142 side. As described above, the barrel 140 includes the facing surface 142 facing the groove forming surface 132 of the rotor 130. The communication hole 146 communicating with the nozzle 156 is provided at a center of the facing surface 142. A plurality of guide grooves 144 are provided around the communication hole 146 in the facing surface 142. One end of each guide groove 144 is coupled to the communication hole 146, and the guide grooves 144 extend from the communication hole 146 toward the outer periphery of the facing surface 142 so as to form a swirl shape. The guide groove 144 has a function of guiding a modeling material to the communication hole 146. The guide groove 144 may not be formed.

The facing surface 142 includes a first region AR1 and a second region AR2. The first region AR1 and the second region AR2 are both annular regions, and the second region AR2 is a region closer to the communication hole 146 than is the first region AR1.

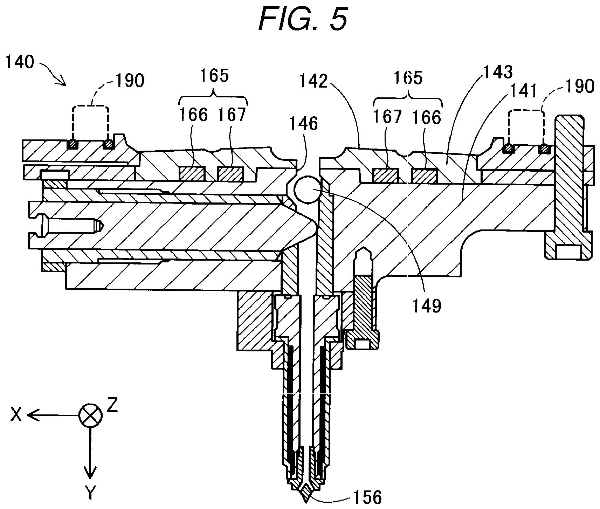

FIG. 5 is an enlarged cross-sectional view showing a configuration on a vicinity of the barrel 140 in FIG. 2. As shown in FIG. 5, the barrel 140 includes a main body portion 141 and a surface portion 143 forming the facing surface 142. The surface portion 143 is fixed to a surface of the main body portion 141 on a -Y direction side. The heating portion 165 is disposed between the main body portion 141 and the surface portion 143. That is, the heating portion 165 is embedded in the barrel 140. The heating portion 165 heats the material supplied to between the groove 135 of the rotor 130 and the barrel 140.

The heating portion 165 includes a first heating portion 166 and a second heating portion 167. In the present embodiment, the first heating portion 166 and the second heating portion 167 both have a shape surrounding the communication hole 146 when viewed from a direction perpendicular to the groove forming surface 132 of the rotor 130, that is, the Y direction. Specifically, the first heating portion 166 and the second heating portion 167 each have an annular shape. The first heating portion 166 and the second heating portion 167 are each configured by, for example, an aluminum nitride heater. In addition to the aluminum nitride heater, the first heating portion 166 and the second heating portion 167 may be heaters using, for example, other ceramics such as silicon nitride, or heaters in which heating wires are formed in an annular shape.

A diameter of the second heating portion 167 is smaller than a diameter of the first heating portion 166. The second heating portion 167 is disposed at a position closer to the communication hole 146 than is a position of the first heating portion 166. The first heating portion 166 and the second heating portion 167 are individually controlled by the controller 500. The controller 500 adjusts a temperature of the first region AR1 of the facing surface 142 by controlling the first heating portion 166. The controller 500 adjusts a temperature of the second region AR2 of the facing surface 142 by controlling the second heating portion 167. The first region AR1 and the second region AR2 are provided with temperature sensors (not shown), respectively. The controller 500 controls the first heating portion 166 or the second heating portion 167 such that a temperature measured by the temperature sensor is a desired temperature.

A refrigerant flow path 190 is disposed in the annular shape on an outer side of the second region AR2 of the facing surface 142 and on an outer side of the rotor 130. The refrigerant flow path 190 is formed by forming a recess in the case 121. A refrigerant circulates through the refrigerant flow path 190, and thus a vicinity of an outer peripheral portion of the first region AR1 and a vicinity of the material introduction port 134 of the rotor 130 are cooled. For example, water is used as the refrigerant.

The melting portion 120 conveys the material, which was supplied to between the grooves 135 of the rotor 130 and the barrel 140, to the communication hole 146 by rotating the rotor 130 with respect to the barrel 140 and plasticizes the material while heating the material by the heating portion 165. Then, the plasticized material is discharged from the communication hole 146 to the injection controller 150 and the nozzle 156. The check valve 149 is provided in the communication hole 146. The check valve 149 prevents a backflow of the material from the communication hole 146 to the grooves 135 of the rotor 130.

The injection controller 150 includes a cylinder 151, a plunger 152, and a plunger drive unit 153. The cylinder 151 is a substantially cylindrical member coupled to the communication hole 146 of the barrel 140. The plunger 152 moves inside the cylinder 151. The plunger 152 is driven by the plunger drive unit 153 configured by a motor, a gear, or the like. The plunger drive unit 153 is controlled by the controller 500.

The injection controller 150 slides the plunger 152 in the cylinder 151 under the control of the controller 500 so as to execute a metering operation and an injecting operation. The metering operation refers to an operation of guiding the molten material in the communication hole 146 into the cylinder 151 so as to be metered in the cylinder 151 by moving the plunger 152 in a direction away from the communication hole 146. The injecting operation refers to an operation of injecting the molten material in the cylinder 151 into the molding mold 160 via the nozzle 156 by moving the plunger 152 in a direction approaching the communication hole 146.

As described above, the nozzle 156 communicates with the communication hole 146. By executing the above metering operation and injecting operation, the molten material metered in the cylinder 151 is sent from the injection controller 150 to the nozzle 156 via the communication hole 146.

The molten material sent to the nozzle 156 is injected from the nozzle 156 into a cavity 164 of the molding mold 160. The molding mold 160 includes a movable mold 162 and a fixed mold 163 that face each other, and includes the cavity 164 between the movable mold 162 and the fixed mold 163. The cavity 164 is defined by a projection and recess shape formed on the movable mold 162 and the fixed mold 163.

The mold clamping portion 170 includes a mold drive unit 171 and a ball screw 172. The mold drive unit 171 is configured by a motor, a gear, or the like, and is coupled to the movable mold 162 via the ball screw 172. Driving of the mold drive unit 171 is controlled by the controller 500. The ball screw 172 transfers power generated based on the driving of the mold drive unit 171 to the movable mold 162. The mold clamping portion 170 opens the molding mold 160 by moving the movable mold 162 using the mold drive unit 171 and the ball screw 172 under the control of the controller 500, that is, performs an operation of separating the movable mold 162 from the fixed mold 163. When the molding mold 160 is opened, the molded product is released from the cavity 164 by an ejector pin 181.

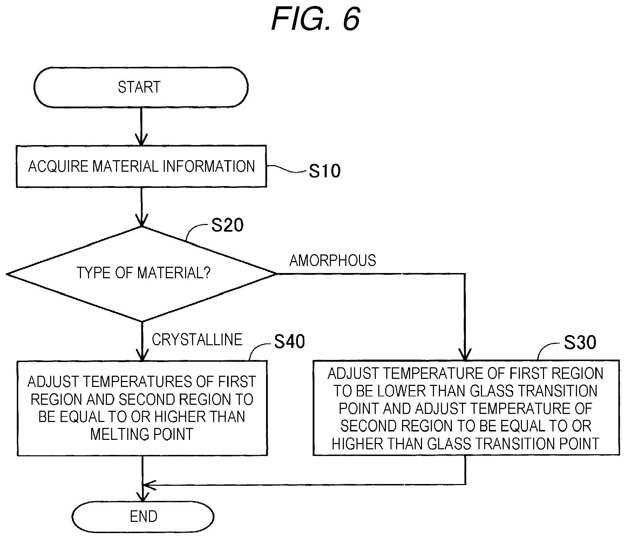

FIG. 6 is a flowchart of a temperature setting process to be executed by the controller 500. This process is a process to be executed by the controller 500 prior to an actual injection molding in the injection molding apparatus 10. First, in step S10, the controller 500 acquires material information indicating the type of the material from the user via the touch panel 21. The controller 500 may acquire the material information from a device coupled to the injection molding apparatus 10, a network, or a recording medium.

In step S20, the controller 500 determines whether the material is an amorphous resin or a crystalline resin based on the acquired material information. The controller 500 determines whether the material is an amorphous resin or a crystalline resin by referring to, for example, a table showing a correspondence between the material and whether the type of the material is an amorphous resin or a crystalline resin.

When it is determined that the type of the material is an amorphous resin, in step S30, the controller 500 controls the first heating portion 166 to adjust the temperature of the first region AR1 to be lower than a glass transition point temperature of the material, and further, controls the second heating portion 167 to adjust the temperature of the second region AR2 to be equal to or higher than the glass transition point temperature of the material. The glass transition point corresponding to the material is defined, for example, in the table described above.

On the other hand, when it is determined that the type of the material is a crystalline resin, in step S40, the controller 500 controls the first heating portion 166 and the second heating portion 167 to adjust the temperatures of the first region AR1 and the second region AR2 to be both equal to or higher than the melting point of the material. The controller 500 adjusts the temperatures of the first region AR1 and the second region AR2 to be equal to or higher than the melting point of the material, and at the same time, adjusts the temperature of the second region AR2 to be higher than the temperature of the first region AR1. The melting point corresponding to the material is defined, for example, in the table described above.

By executing the temperature setting process described above, the controller 500 reduces a temperature difference between the first region AR1 and the second region AR2 when the material is a crystalline resin as compared with a case where the material is an amorphous resin. When the temperature setting process described above is completed, the controller 500 controls the temperatures of the first region AR1 and the second region AR2 so as to reach the temperature set in step S30 or step S40 described above, and controls the plasticizing portion 100, the injection controller 150, and the mold clamping portion 170 to manufacture the molded product.

According to the injection molding apparatus 10 of the first embodiment described above, the temperature of the second region AR2 is higher than the temperature of the first region AR1 and when the material includes the crystalline resin, the temperature difference between the first region AR1 and the second region AR2 of the barrel 140 is reduced as compared with a case where the material includes the crystalline resin, so that the material including either a crystalline resin or an amorphous resin can be satisfactorily plasticized. Therefore, the metering in the injection controller 150 can be performed quickly, and the injection molding can be performed efficiently.

Further, in the present embodiment, when the material includes the amorphous resin, the controller 500 controls the heating portion 165 to adjust the temperature of the first region AR1 far from the communication hole 146 to be lower than the glass transition point of the amorphous resin, and adjusts the temperature of the second region AR2 closer to the communication hole 146 to be equal to or higher than the glass transition point. Therefore, it is possible to prevent the melting of the material in the first region AR1 far from the communication hole 146 and promote the melting of the material in the second region AR2 closer to the communication hole 146. As a result, a material in a solid state existing in the vicinity of the first region AR1 moves toward the communication hole 146 due to rotation of the rotor 130, so that the plasticized material in the vicinity of the second region AR2 can be satisfactorily pumped from the communication hole 146. The amorphous resin has high dependence to shear rate-viscosity, and viscosity of the material in a completely melted state tends to be smaller in the first region AR1 facing the outer peripheral portion of the rotor 130 having a high shear rate. Therefore, if the material is melted in the first region AR1, it becomes difficult to pump the molten material toward the communication hole 146. However, in the present embodiment, since the temperature of the first region AR1 in which the material tends to have low viscosity is lowered, melting of the material in the vicinity of the first region AR1 can be prevented. As a result, the molten material in the vicinity of the second region AR2 can be efficiently pumped from the communication hole 146 by the material in the solid state in the vicinity of the first region AR1.

Further, in the present embodiment, when the material includes a crystalline resin, the controller 500 controls the heating portion 165 to adjust the temperatures of both the first region AR1 and the second region AR2 to be equal to or higher than the melting point of the crystalline resin. Therefore, the crystalline resin having a high melt softening start temperature can be satisfactorily plasticized in the first region AR1 and the second region AR2. In the present embodiment, since the refrigerant flow path 190 is provided on an outer side of the first region AR1, the material in the outer peripheral portion of the first region AR1 and in the vicinity of the material introduction port 134 of the rotor 130 is preventing from being melted. Therefore, the molten material in the first region AR1 and the second region AR2 can be satisfactorily pumped from the communication hole 146 by the material in the solid state in the outer peripheral portion of the first region AR1 and the vicinity of the material introduction port 134 of the rotor 130. Since the crystalline resin has low shear rate-viscosity dependence, the viscosity of the molten material in the first region AR1 and the second region AR2 is almost the same regardless of a distance from the communication hole 146. Therefore, even when the material in the solid state is present in the outer peripheral portion of the first region AR1 and in the vicinity of the material introduction port 134 of the rotor 130, it is sufficiently possible to pump the molten resin toward the communication hole 146.

Further, in the present embodiment, the heating portion 165 includes the first heating portion 166 and the second heating portion 167, and the controller 500 individually controls the first heating portion 166 and the second heating portion 167. Therefore, the temperature difference between the first region AR1 and the second region AR2 can be easily controlled.

Further, in the present embodiment, the first heating portion 166 and the second heating portion 167 each have a shape surrounding the communication hole 146 when viewed from a direction perpendicular to the groove forming surface 132. Specifically, the shapes of the first heating portion 166 and the second heating portion 167 are a ring shape. Therefore, in each of the first region AR1 and the second region AR2, an occurrence of uneven melting in a circumferential direction can be prevented, and the material can be satisfactorily plasticized. In the present embodiment, the shapes of the first heating portion 166 and the second heating portion 167 are the ring shape, and the shape may be a polygonal shape surrounding the communication hole.

Further, in the present embodiment, the controller 500 acquires the material information including the type of the material and determines whether the material includes the crystalline resin or the amorphous resin, so that it can be easily specified whether the material includes the crystalline resin or the amorphous resin.

### B. Second Embodiment:

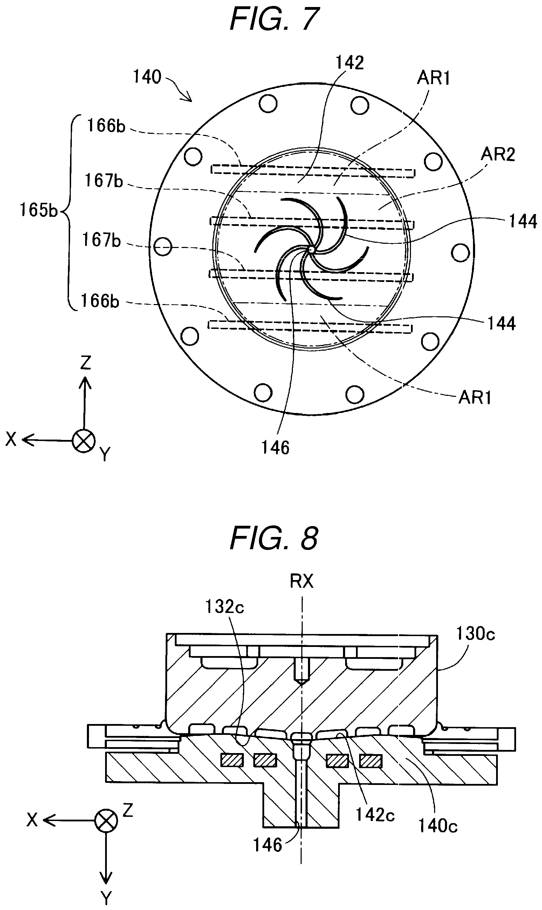

FIG. 7 is an explanatory view showing a configuration of a heating portion 165b according to a second embodiment. FIG. 7 shows a state in which the barrel 140 is viewed from the -Y direction. A configuration of the injection molding apparatus 10 of the second embodiment is the same as that of the first embodiment except for the configuration of the heating portion 165b.

The heating portion 165b includes first heating portions 166b and second heating portions 167b. The first heating portions 166b and the second heating portions 167b are embedded in the barrel 140 as in the first embodiment. Both the first heating portions 166b and the second heating portions 167b are rod-shaped heaters extending along the facing surface 142. The facing surface 142 includes the first region AR1 and the second region AR2. The second region AR2 is a region closer to the communication hole 146 than is the first region AR1. The second region AR2 is a substantially rectangular region along the second heating portions 167b, and the first region AR1 is a substantially half-moon-shaped region located on the outer side of the second region AR2.

A set of the first heating portions 166b is arranged at positions sandwiching the communication hole 146. A set of the second heating portions 167b is arranged so as to sandwich the communication hole 146 at positions closer to the communication hole 146 than are the positions of the first heating portions 166b. The first heating portions 166b and the second heating portions 167b are individually controlled by the controller 500. The controller 500 controls the first heating portions 166b to adjust the temperature of the first region AR1 of the facing surface 142. The controller 500 controls the second heating portions 167b to adjust the temperature of the second region AR2 of the facing surface 142. In the present embodiment, the controller 500 also controls the heating portion 165 to adjust the temperature of the second region AR2 to be higher than the temperature of the first region AR1, and to reduce the temperature difference between the first region AR1 and the second region AR2 when the material includes a crystalline resin as compared with the case where the material includes an amorphous resin.

In the second embodiment configured as described above, similarly to the first embodiment, the material can be satisfactorily plasticized regardless of whether the material includes a crystalline resin or an amorphous resin.

### C. Third Embodiment:

FIG. 8 is a cross-sectional view showing a state of a rotor 130c and a barrel 140c according to a third embodiment. A configuration of the injection molding apparatus 10 of the third embodiment is the same as that of the first embodiment or the second embodiment except a state of the rotor 130c and the barrel 140c.

As shown in FIG. 8, the rotor 130c in the third embodiment has a shape projecting toward the barrel 140c. Specifically, when viewed at a cross section of the rotor 130c along the central axis RX, a groove forming surface 132c of the rotor 130c has a shape that protrudes toward the barrel 140c from an outer periphery toward the central axis RX. That is, the groove forming surface 132c is inclined such that a vicinity of the central axis RX of the rotor 130c protrudes toward a barrel 140c side.

The barrel 140c in the third embodiment has a shape that is recessed toward an opposite side of the rotor 130c. Specifically, when viewing the cross section of the rotor 130c along the central axis RX, a facing surface 142c of the barrel 140c has a shape of being recessed such that a depth increases from the outer periphery toward the central axis RX. That is, the facing surface 142c is inclined to a mortar shape such that a depth near the communication hole 146 of the barrel 140c is the deepest. An inclination angle of the facing surface 142c is the same as an inclination angle of the groove forming surface 132c. Further, there is no guide groove formed on the facing surface 142c of the barrel 140c in the third embodiment.

By using the rotor 130c and the barrel 140c according to the third embodiment described above, similarly to the first embodiment or the second embodiment, the material can also be satisfactorily plasticized and discharged from the nozzle 156 regardless of whether the material includes a crystalline resin or an amorphous resin. Specifically, in the present embodiment, since the barrel 140c has the shape that is recessed toward the opposite side of the rotor 130c, even when the guide groove is not formed on the facing surface 142c, the molten material can be satisfactorily discharged from the communication hole 146.

In the present embodiment, the guide groove 144 is not formed on the facing surface 142 of the barrel 140c, but the guide groove 144 may be formed on the facing surface 142.

### D. Fourth Embodiment:

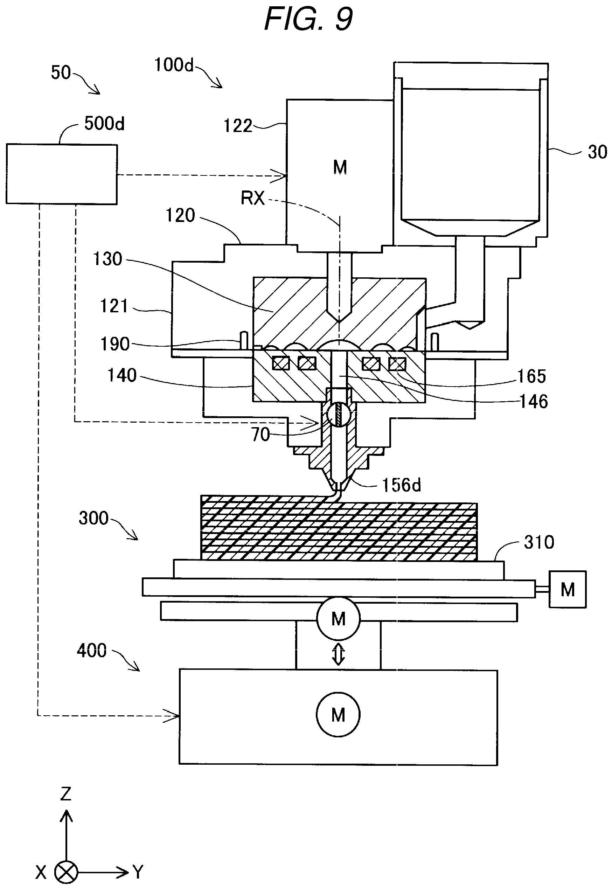

FIG. 9 is a cross-sectional view showing a schematic configuration of a three-dimensional modeling apparatus 50 according to a fourth embodiment. The three-dimensional modeling apparatus 50 includes a plasticizing portion 100d, a stage 300, a moving mechanism 400, and a controller 500d.

The plasticizing portion 100d includes the hopper 30, the melting portion 120, and a nozzle 156d. The melting portion 120 includes the case 121, the drive motor 122, the rotor 130, the barrel 140, and the heating portion 165. These configurations are the same as those in the first to third embodiments. The communication hole 146 provided in the barrel 140 communicates with the nozzle 156d. A valve 70 is provided between the communication hole 146 and the nozzle 156d to switch a discharge amount of the molten material from the nozzle 156d or a presence or absence of the discharge. The valve 70 is driven under control of the controller 500d.

The stage 300 includes a modeling surface 310 facing the nozzle 156d. A three-dimensional modeling object is modeled on the modeling surface 310. In the present embodiment, the modeling surface 310 is provided to be parallel to a horizontal direction. The stage 300 is supported by the moving mechanism 400.

The moving mechanism 400 changes a relative position between the nozzle 156d and the modeling surface 310. In the present embodiment, the moving mechanism 400 changes the relative position between the nozzle 156d and the modeling surface 310 by moving the stage 300. The moving mechanism 400 according to the present embodiment is configured by a three-axis positioner that moves the stage 300 in three axial directions, which are the X, Y and Z directions, by a force generated by three motors. Each motor is driven under the control of the controller 500d. The moving mechanism 400 may be configured to change the relative position between the nozzle 156d and the modeling surface 310 by moving the plasticizing portion 100d instead of moving the stage 300. The moving mechanism 400 may be configured to change the relative position between the nozzle 156d and the modeling surface 310 by moving both the stage 300 and the plasticizing portion 100d.

The three-dimensional modeling apparatus 50 stacks layers of the modeling material on the modeling surface 310 to model the three-dimensional modeling object having a desired shape by, under the control of the controller 500d, discharging the molten material from the nozzle 156d while changing the relative position between the nozzle 156d and the stage 300.

According to the three-dimensional modeling apparatus 50 according to the fourth embodiment described above, the material can be satisfactorily plasticized regardless of whether the material includes a crystalline resin or an amorphous resin, and therefore, regardless of the type of the material, a modeling speed of the three-dimensional modeling object can be improved.

### E. Other Embodiments:

E-1. In the above embodiment, when the material includes a crystalline resin, the controller 500 controls the heating portion 165 to adjust the temperatures of both the first region AR1 and the second region AR2 to be equal to or higher than a melting point of the crystalline resin. On the other hand, when the material includes the crystalline resin, the controller 500 may adjust the temperature of the first region AR1 to be lower than the melting point of the crystalline resin and adjust the temperature of the second region AR2 to be equal to or higher than the melting point temperature of the crystalline resin. When the temperatures of the first region and the second region are adjusted in this way, it is also possible to plasticize the crystalline resin and discharge the crystalline resin from the communication hole.

E-2. In the above embodiment, the heating portion 165 includes the first heating portion 166 and the second heating portion 167, and the controller 500 individually adjusts the temperatures of the first region AR1 and the second region AR2 by individually controlling the first heating portion 166 and the second heating portion 167. On the other hand, for example, the heating portion 165 may be provided singly, and the controller 500 may control the temperature difference between the first region AR1 and the second region AR2 by adjusting a temperature of a refrigerant flowing through the refrigerant flow path 190 and a temperature of the single heating portion 165.

E-3. In the above embodiment, it is assumed that the material used for the injection molding or three-dimensional modeling is a crystalline resin or an amorphous resin. On the other hand, in addition to the crystalline resin or the amorphous resin, pigments, and additives such as metals, ceramics, waxes, flame retardants, antioxidants, and heat stabilizers may be mixed in the material.

### F. Other Aspects:

The present disclosure is not limited to the embodiments described above, and may be implemented by various configurations without departing from the scope of the present disclosure. For example, in order to solve a part of or all of problems described above, or to achieve a part of or all of effects described above, technical characteristics in the embodiments corresponding to technical characteristics in aspects described below can be replaced or combined as appropriate. In addition, if the technical characteristics are not described as essential in the present description, the technical characteristics can be appropriately deleted.
1. A first aspect of the present disclosure provides a plasticizing apparatus. The plasticizing apparatus includes: a drive motor; a rotor that is rotated around a rotation axis by the drive motor and that has a groove forming surface on which a groove is formed; a barrel that has a facing surface facing the groove forming surface and that includes a communication hole in the facing surface; a heating portion that heats a material supplied to between the groove and the barrel; and a controller that controls the drive motor and the heating portion to plasticize the material supplied to between the groove and the barrel and discharge the material from the communication hole, the facing surface includes a first region and a second region that is closer to the communication hole than is the first region, the controller controls the heating portion to set a temperature of the second region to be higher than a temperature of the first region, and the controller controls the heating portion to reduce a temperature difference between the first region and the second region when the material includes a crystalline resin as compared with a case where the material includes an amorphous resin.
   According to such an aspect, the temperature of the second region closer to the communication hole of the barrel is higher than the temperature of the first region far from the communication hole and when the material includes a crystalline resin, the temperature difference between the first region and the second region is reduced as compared with the case where the material includes an amorphous resin, so that the material including either a crystalline resin or an amorphous resin can be satisfactorily plasticized.
2. In the above aspect, the controller may acquire material information indicating a type of the material, and determine whether the material includes a crystalline resin or an amorphous resin based on the material information. According to such an aspect, it can be easily specified whether the material includes a crystalline resin or an amorphous resin.
3. In the above aspect, when the material includes an amorphous resin, the controller may control the heating portion to adjust a temperature of the first region to be lower than a glass transition point of the amorphous resin, and adjust a temperature of the second region to be equal to or higher than the glass transition point. According to such an aspect, the material can be satisfactorily plasticized when the material includes an amorphous resin.
4. In the above aspect, when the material includes a crystalline resin, the controller may control the heating portion to adjust temperatures of both the first region and the second region to be equal to or higher than a melting point of the crystalline resin. According to such an aspect, the material can be satisfactorily plasticized when the material includes a crystalline resin.
5. In the above aspect, when the material includes a crystalline resin, the controller may adjust a temperature of the first region to be lower than a melting point of the crystalline resin, and adjust a temperature of the second region to be equal to or higher than the melting point of the crystalline resin. According to such an aspect, the material can be satisfactorily plasticized when the material includes a crystalline resin.
6. In the above aspect, the heating portion may include a first heating portion and a second heating portion that is disposed closer to the communication hole than is the first heating portion, and the controller may individually control the first heating portion and the second heating portion. According to such an aspect, the temperature difference between the first region and the second region can be easily controlled.
7. In the above aspect, the first heating portion and the second heating portion may have a shape surrounding the communication hole when viewed from a direction perpendicular to the groove forming surface. According to such an aspect, the material can be satisfactorily plasticized.
8. In the above aspect, the first heating portion and the second heating portion may have a polygonal shape or a ring shape when viewed from a direction perpendicular to the groove forming surface. According to such an aspect, the material can be satisfactorily plasticized.
9. In the above aspect, when viewing a cross section along the rotation axis, the groove forming surface of the rotor may have a shape that protrudes toward the barrel from an outer periphery toward the central axis, and the facing surface of the barrel may have a shape of being recessed such that a depth increases from an outer periphery toward the central axis. According to such an aspect, the material can be satisfactorily plasticized.
10. A second aspect of this disclosure provides an injection molding apparatus that includes the plasticizing apparatus according to the above aspect; and a nozzle that communicates with the communication hole and from which the plasticized material is injected into a molding mold.
11. A third aspect of this disclosure provides a three-dimensional modeling apparatus that includes: the plasticizing apparatus according to the above aspect; and a nozzle that communicates with the communication hole and from which the plasticized material is discharged toward a table.

## Claims

1. A plasticizing apparatus, comprising:
a drive motor;
a rotor that is rotated around a rotation axis by the drive motor and that has a groove forming surface on which a groove is formed;
a barrel that has a facing surface facing the groove forming surface and that includes a communication hole in the facing surface;
a heating portion that heats a material supplied to between the groove and the barrel; and
a controller that controls the drive motor and the heating portion to plasticize the material supplied to between the groove and the barrel and discharge the material from the communication hole, wherein
the facing surface includes a first region and a second region that is closer to the communication hole than is the first region,
the controller controls the heating portion to set a temperature of the second region to be higher than a temperature of the first region, and
the controller controls the heating portion to reduce a temperature difference between the first region and the second region when the material includes a crystalline resin as compared with a case where the material includes an amorphous resin.

2. The plasticizing apparatus according to claim 1, wherein
the controller acquires material information indicating a type of the material, and determines whether the material includes a crystalline resin or an amorphous resin based on the material information.

3. The plasticizing apparatus according to claim 1, wherein
when the material includes an amorphous resin, the controller controls the heating portion to adjust a temperature of the first region to be lower than a glass transition point of the amorphous resin, and to adjust a temperature of the second region to be equal to or higher than the glass transition point.

4. The plasticizing apparatus according to claim 1, wherein
when the material includes a crystalline resin, the controller controls the heating portion to adjust temperatures of both the first region and the second region to be equal to or higher than a melting point of the crystalline resin.

5. The plasticizing apparatus according to claim 1, wherein
when the material includes a crystalline resin, the controller adjusts a temperature of the first region to be lower than a melting point of the crystalline resin, and adjusts a temperature of the second region to be equal to or higher than the melting point of the crystalline resin.

6. The plasticizing apparatus according to claim 1, wherein
the heating portion includes a first heating portion and a second heating portion that is disposed closer to the communication hole than is the first heating portion, and
the controller individually controls the first heating portion and the second heating portion.

7. The plasticizing apparatus according to claim 6, wherein
the first heating portion and the second heating portion have a shape surrounding the communication hole when viewed from a direction perpendicular to the groove forming surface.

8. The plasticizing apparatus according to claim 7, wherein
the first heating portion and the second heating portion have a polygonal shape or a ring shape when viewed from a direction perpendicular to the groove forming surface.

9. The plasticizing apparatus according to claim 1, wherein
when viewing a cross section along the rotation axis, the groove forming surface of the rotor has a shape that protrudes toward the barrel from an outer periphery toward the central axis, and the facing surface of the barrel has a shape of being recessed such that a depth increases from an outer periphery toward the central axis.

10. An injection molding apparatus, comprising:
the plasticizing apparatus according to claim 1; and
a nozzle that communicates with the communication hole and from which the plasticized material is injected into a molding mold.

11. A three-dimensional modeling apparatus, comprising:
the plasticizing apparatus according to claim 1; and
a nozzle that communicates with the communication hole and from which the plasticized material is discharged toward a table.
